(19) Europäisches Patentamt / European Patent Office / Office européen des brevets

(11) **EP 3 323 634 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **17194917.5**

(22) Anmeldetag: **05.10.2017**

(51) Internationale Patentklassifikation (IPC):
**B60C 9/00** *(2006.01)* **D02G 3/48** *(2006.01)*

(52) Gemeinsame Patentklassifikation (CPC):
**B60C 9/005; B60C 9/0042; D02G 3/48;**
B60C 2009/0071; B60C 2009/2257;
B60C 2009/2285; D02G 3/26

(54) **HYBRIDKORD ZUR VERWENDUNG ALS FESTIGKEITSTRÄGER IN EINEM BAUTEIL EINES FAHRZEUGLUFTREIFENS UND FAHRZEUGLUFTREIFEN**

HYBRID CORD FOR USE AS A REINFORCING SUPPORT IN A COMPONENT OF A VEHICLE PNEUMATIC TYRE AND VEHICLE PNEUMATIC TYRE

CORDE HYBRIDE DESTINÉE À ÊTRE UTILISÉE EN TANT QUE SUPPORT DE FIXATION DANS UN COMPOSANT D'UN PNEU DE VÉHICULE ET PNEU DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2016 DE 102016222725**

(43) Veröffentlichungstag der Anmeldung:
**23.05.2018 Patentblatt 2018/21**

(73) Patentinhaber: **Continental Reifen Deutschland GmbH**
**30165 Hannover (DE)**

(72) Erfinder:
• **Werner, Viktoria**
**30827 Garbsen (DE)**
• **Reese, Wolfgang**
**31228 Peine (DE)**
• **Schunack, Michael**
**30161 Hannover (DE)**
• **Kramer, Thomas**
**32049 Herford (DE)**
• **Justine, Carole**
**31535 Scharrel (DE)**
• **Pöhler, Ute**
**30900 Wedemark (DE)**
• **Nabih, Nermeen**
**30173 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**EP-A1- 1 475 248      EP-A1- 3 006 228**
**WO-A1-03/060212**

**Beschreibung**

Die Erfindung betrifft einen Hybridkord zur Verwendung als Festigkeitsträger in einem Bauteil eines Fahrzeugluftreifens aus zumindest zwei miteinander endverdrehten Garnen,

wobei wenigstens ein erstes Garn ein hochmoduliges Garn und ein weiteres Garn ein niedermoduliges Garn ist,
wobei das hochmodulige Garn ein Filamentgarn und das niedermodulige Garn ein Garn aus Stapelfasern ist,
wobei ein niedermoduliges Garn ein solches ist, bei welchem die Kraft, die auf das Garn bei 1% Dehnung aufgebracht werden muss, < 150mN/tex und die Kraft, die bei 2% Dehnung aufgebracht werden muss, < 200mN/tex ist (ermittelt gemäß ASTM D885),
wobei ein hochmoduliges Garn ein solches ist, bei welchem die Kraft, die auf das Garn bei 1% Dehnung aufgebracht werden muss, > 300mN/tex und die Kraft, die bei 2% Dehnung aufgebracht werden muss, > 500mN/tex ist (ermittelt gemäß ASTM D885).

Die Erfindung betrifft ferner einen Fahrzeugluftreifen, welcher ein Bauteil mit einem derartigen Hybridkord als Festigkeitsträger aufweist.

Ein derartiger Hybridkord ist aus der EP 3 006 228 A1 der Anmelderin bekannt. Dieser Hybridkord ermöglicht bei seiner Verwendung als Festigkeitsträger in Reifenbauteilen, insbesondere in Gürtellagen oder Gürtelbandagen, die Erhebung des Rohreifens mit geringerem Kraftaufwand als mit bekannten Hybridkorden und gewährleistet im fertig vulkanisierten Reifen nach wie vor eine gute Reifengleichförmigkeit und eine gute Hochgeschwindigkeitstauglichkeit.

Aus der WO 03/060212 A1 ist ein Hybridkord bekannt, welcher aus einem verdrehten Faden auf der Basis eines Garnes aus Polyamid 6.6, welches die Seele des Kordes bildet, und einem Faden aus zwei zusammengedrehten Garnen aus Aramid, welcher den Mantel des Kordes bildet, besteht.

Der aus der EP 1 475 248 A1 bekannte Hybridkord ist zur Verstärkung der Gürtelbandage von Fahrzeugluftreifen vorgesehen und symmetrisch aufgebaut, besteht ferner aus einem ersten verdrehten Garn mit einem hohen Elastizitätsmodul von mindestens 25.000 N/mm$^2$ und einem zweiten verdrehten Garn mit einem niedrigen Elastizitätsmodul von nicht mehr als 15.000 N/mm$^2$, wobei die Garne miteinander endverdreht sind. In der Gürtelbandage steht die Kordzahl an Korden pro 5 cm Lagenbreite und die Kraft bei 2 % Dehnung des Hybridkordes sowie die Kraft bei 6 % Dehnung des Hybridkordes in bestimmten Beziehungen zueinander. Keines der beiden Garne besteht aus Stapelfasern.

Generell ist es bekannt, Hybridkorde als Festigkeitsträger in Reifenbauteilen, wie beispielsweise Gürtellagen, Karkasslagen oder Bandagenlagen von Gürteln, zu verwenden. Übliche Hybridkorde setzen sich insbesondere aus einem hochmoduligen Filamentgarn und einem niedermoduligen Filamentgarn zusammen. Das hochmodulige Garn ist meist ein Garn aus Aramid, das niedermodulige Garn besteht meist aus einem Polyamid, vorzugsweise PA 6.6 oder PA 6. So ist beispielsweise aus der DE 10 2008 037 615 A1 ein Hybridkord zur Verwendung als Festigkeitsträger in der Gürtelbandage eines Fahrzeugluftreifens für PKW bekannt, welcher aus zwei miteinander verdrehten Filamentgarnen besteht, wobei das eine Garn aus Aramid und das andere Garn aus Polyamid, insbesondere aus Nylon, besteht. Beide Garne sind in die gleiche Richtung erstverdreht, der Hybridkord ist in die entgegengesetzte Richtung verdreht. Durch die Verwendung dieses Hybridkordes in der Gürtelbandage soll die Hochgeschwindigkeitstauglichkeit des Reifens verbessert werden. Aus der DE 10 2011 053 264 A1 ist ein Hybridkord bekannt, welcher beispielsweise die Konstruktion Aramid 1670×2 + PA 6.6 1400×1 aufweist.

Die bekannten Kombinationen aus zumindest einem hochmoduligen Filamentgarn mit zumindest einem niedermoduligen Filamentgarn ergeben Hybridkorde, welche eine hohe Hysterese aufweisen. Filamentgarne, beispielsweise solche aus Nylon, zeigen eine Hysterese, die auf der Bewegung von Polymerketten basiert, bei Dehnung löst sich die Knäuelstruktur der Polymerketten. In Folge ihres Aufbaus weisen die bekannten Hybridkorde ein bestimmtes Kraft-Dehnungs-Verhalten auf. In einem Zugkraft-/DehnungsDiagramm weist die Kurve bei geringer Dehnung zunächst eine geringe Steigung auf, bei höherer Dehnung steigt die Kurve immer stärker an, sodass im letzten Bereich eine weitere geringe Dehnung mit einem hohen Kraftaufwand verbunden ist. Dieses Kraft-Dehnungs-Verhalten bekannter Hybridkorde ermöglicht beim Aufbauprozess des Reifens - bei der Bombage - und beim nachfolgenden Einformen des Rohreifens in eine Vulkanisationsform eine ausreichende Erhebung, im fertigen Reifen eine gute Reifengleichförmigkeit und eine gute Hochgeschwindigkeitstauglichkeit. Bekannte Hybridkorde weisen insbesondere infolge der hohen Hysterese des niedermoduligen Filamentgarnes insgesamt eine höhere Hysterese auf. Werden bekannte Hybridkorde in Gürtellagen oder Bandagenlagen von Gürteln als Festigkeitsträger verwendet, können beim Laufbetrieb des Reifens, bedingt durch die Dehnung der Hybridkorde, Reibungsverluste auftreten, die sich auf den Rollwiderstand des Reifens nachteilig auswirken können.

Der Hybridkord gemäß dem Oberbegriff enthält wenigstens ein hochmoduliges Garn, welches ein Filamentgarn ist, sodass der Hybridkord bei einer Dehnung ab etwa 3 % einen hohen Elastizitätsmodul aufweist. Daraus resultieren eine sehr gute Reifengleichförmigkeit und eine sehr gute Hochgeschwindigkeitstauglichkeit von Reifen mit einem solchen Hybridkord als Festigkeitsträger beispielsweise in einer Gürtelbandage. Das aus Stapelfasern gesponnene Garn ist unabhängig davon, aus welchem Material seine Fasern bestehen, ein niedermoduliges Garn, welches sich leicht dehnen lässt, da die Dehnung zunächst über die Faserstruktur und anschließend über ein Abgleiten der einzelnen kurzen Fasern aneinander erfolgt. Dadurch weist der Hybridkord vorteilhafterweise eine niedrige Hysterese auf. Wird ein Hybridkord in einer Gürtellage, einer Bandagenlage eines Gürtels und/oder in der Karkasse als Festigkeitsträger verwendet, ist die Erhebung des Rohreifens bei der Bombage und beim Einformen des Reifens in die Vulkanisationsform mit geringem Kraftaufwand verbunden. Im fertig vulkanisierten Reifen kommen die Vorteile des hochmoduligen Garns voll zum Tragen. Zu diesen gehört das Sicherstellen einer hohen Umfangssteifigkeit des Reifens, wodurch die dynamische Kontur bei Umfangswachstum vorteilhaft beeinflusst wird. Beim Laufbetrieb des Reifens bewirkt das "Abgleiten" der Stapelfasern geringere Hystereseverluste, sodass der Rollwiderstand günstig beeinflusst wird.

Der Erfindung liegt die Aufgabe zugrunde, einen Hybridkord zur Verfügung zu stellen, welcher bei seiner Verwendung als Festigkeitsträger in Reifenbauteilen, insbesondere in Gürtellagen oder Gürtelbandagen, die Erhebung des Rohreifens mit noch geringerem Kraftaufwand als mit bekannten Hybridkorden ermöglicht und im fertig vulkanisierten Reifen nach wie vor eine gute Reifengleichförmigkeit, ein gutes Handling und eine gute Hochgeschwindigkeitstauglichkeit gewährleistet. Die aufzuwendende Kraft bei einer Dehnung von 3,5% soll möglichst klein sein, dafür soll die Bruchkraft ausreichend hoch sein.

Die Aufgabe wird gelöst, indem die Garndrehung des niedermoduligen Garnes entgegengesetzt zu der Garndrehung des hochmoduligen Garnes ist, indem die Endverdrehung des Hybridkordes entgegen der Drehrichtung des hochmoduligen Garnes derart gewählt ist, dass die Nettoverdrehung des hochmoduligen Garnes zwischen 0 und 50 turns per meter (tpm) liegt und indem der Hybridkord einen Quotienten aus Bruchkraft [N] durch FASE [N] bei 3,5% aufweist, welcher größer 10 ist.

Erfindungsgemäß ist ein unerwartet stark verbesserter vorteilhafter Verlauf der Kraft-Dehnungs-Kurve durch bestimmte Verdrehungen des hochmoduligen Garnes, des niedermoduligen Garnes und des Kordes erhalten. Bis etwa 3,5% ist eine Dehnung des Hybridkordes mit nur geringem Kraftaufwand möglich, welches vorteilhaft für ein sauberes Einformen des Reifenrohlings in die Vulkanisierform ermöglicht. Ab etwa 3,5% ist eine Dehnung nur noch unter hohem Kraftaufwand möglich, welches sich vorteilhaft auf das Handling und die HighSpeed-Eigenschaften des betriebsbereiten Reifens auswirkt. Dieser unerwartet vorteilhafte Verlauf wird durch den Quotienten aus Bruchkraft und FASE bei 3,5% beschrieben, welcher > 10 ist.

Das hochmodulige Garn im Kord hat eine Nettoverdrehung von 0 bis 50 tpm, während das niedermodulige Garn im Kord überdreht ist und eine Nettoverdrehung von > 300 tpm aufweist.

Das niedermodulige Garn aus Stapelfaser weist einen sogenannten Schutzdrall von etwa 100 tpm (turns per meter) in S- oder Z-Richtung auf, wodurch die einzelnen Fasern zum Garn zusammenhalten. Wenn nachfolgend Angaben zur Verdrehung des Garnes aus Stapelfasern gemacht werden, ist der Schutzdrall immer enthalten und die zusätzliche zum Schutzdrall hinzugegebene Verdrehung ist immer in Richtung der Verdrehung des Schutzdralles. Ist beispielsweise die Verdrehung des Garnes aus Stapelfasern 250 tpm, dann wurden zu dem Schutzdrall von 100 tpm noch 150 tpm in gleicher Richtung hinzugedreht.

"FASE bei 3,5%" bedeutet "Force at spezific elongation", also Kraft bei spezifischer Dehnung des Festigkeitsträgers bei 3,5%.

Der Hybridkord weist eine Bruchdehnung ≥ 5 % auf.

Die Fasern des Stapelfasergarnes weisen eine Länge von 1 cm bis 10 cm auf. "Nettoverdrehung eines Garnes" meint die Verdrehung des Garnes im Kord. Gleiche Drehrichtungen von Garn und Kord werden addiert, entgegengesetzte Drehrichtungen werden subtrahiert. Ist beispielsweise das Garn 180 Z verdreht und der Kord 180 S endverdreht, ist die Nettoverdrehung 0 (180 Z - 180 S). Ist beispielsweise das Garn 220 Z verdreht und der Kord 180 Z endverdreht, ist die Nettoverdrehung 400 Z (220 Z + 180 Z).

Mit dem Begriff "hochmoduliges Garn" ist ein Garn gemeint, welches aus einem hochmoduligen Material besteht. Mit dem Begriff "niedermoduliges Garn" ist ein Garn gemeint, welches aus einem niedermoduligen Material besteht.

Dabei werden das niedermodulige Garn und das hochmodulige Garn anhand der in der nachfolgenden Tabelle 1 beschriebenen Werte in (mN/tex) definiert. Es ist die Kraft bestimmt, die jeweils auf ein Garn bei 1% Dehnung und bei 2% Dehnung aufgebracht werden muss, normiert auf die Garnfeinheit in tex. Ermittelt wird nach ASTM D885.

Tabelle 1

| Garn / Dehnung | 1% | 2% |
|---|---|---|
| Niedermodulig | < 150 mN/tex | < 200 mN/tex |
| Hochmodulig | > 300 mN/tex | > 500 mN/tex |

Vorteilhaft ist es, wenn der Hybridkord einen Quotienten aus Bruchkraft [N] durch FASE [N] bei 3,5% aufweist, welcher größer 10,5, bevorzugt größer 11 ist.

Als Material für das Garn aus Stapelfasern ist eine Vielzahl von Materialien geeignet. So können die Stapelfasern Fasern aus Aramid, Polyimid, Polyamid, Polyester, PPS oder PEEK sein, aber auch Naturfasern aus Baumwolle, Jute, Flachs, Viskose® oder Modal®. Für das hochmodulige Filamentgarn eignen sich vor allem Filamente aus Aramid, Polyimid, PPS oder PEEK.

Ein Twistfaktor gibt indirekt eine Aussage über den Helixwinkel der Filamente/ Fasern im Garn, d.h. die Auslenkung aus der Garnachse.

Bei Korden gemäß des Standes der Technik erfolgt die Drehung eines jeden Garnes mit einem bestimmten gleichen Twist (Drehung) in eine gleiche Richtung und die Endverdrehung der Garne zum Kord erfolgt ebenfalls mit dem gleichen Twist jedoch in gegensinnige Richtung. Hier ergibt sich ein Nettotwist von 0. Für diesen Fall gilt die Standardformel des Twistfaktors $\alpha$ = Twist [t/m] · (Feinheit [dtex]/ 10000)$^{1/2}$ mit Twist = Kordverdrehung [t/m].

Im erfindungsgemäßen Kord wird das niedermodulige Stapelfasergarn stark überdreht, während das hochmodulige Filamentgarn einen Nettotwist von 0 bis 30 aufweisen kann.

Daher ist die Formel für den Twistfaktor gemäß der Erfindung an die beiden vorgenannten Garne anzupassen.

Für das hochmodulige Filamentgarn gilt:

$$\alpha = \text{Twist [t/m]} \cdot (\text{Feinheit [dtex]/ } 10000)^{1/2}, \text{ wobei Twist = Kordverdrehung [t/m]}$$
$$+\text{- Nettoverdrehung [t/m]}.$$

wobei Twist = Kordverdrehung [t/m] +- Nettoverdrehung [t/m].

Für das niedermodulige Stapelfasergarn gilt:

$$\alpha = \text{Twist [t/m]} \cdot (\text{Feinheit [dtex]/ } 10000)^{1/2}, \text{ wobei Twist = Nettotwist [t/m]}.$$

wobei Twist = Nettotwist [t/m].

Diese Twistfaktoren stellen einen vorteilhaften Kompromiss bezüglich Ermüdungsbeständigkeit und Festigkeit dar. Ein geringerer Twistfaktor wäre nachteilig in Bezug auf die Ermüdungbeständigkeit, ein höherer Twistfaktor würde eine geringere Festigkeit des Festigkeitsträgers bedeuten.

Vorteilhaft ist es, wenn der Twistfaktor des hochmoduligen Garnes in einem Bereich von 50 bis 100, vorzugsweise in einem Bereich von 63 bis 100 liegt, wobei $\alpha$ = Twist [t/m] · (Feinheit [dtex]/ 10000)$^{1/2}$ mit Twist = Kordverdrehung [t/m] +- Nettoverdrehung [t/m].

Vorteilhaft ist es, wenn der Twistfaktor $\alpha$ des niedermoduligen Garnes in einem Bereich von 100 bis 200, vorzugsweise in einem Bereich von 80 bis 95 liegt, wobei $\alpha$ = Twist [t/m] · (Feinheit [dtex]/ 10000)$^{1/2}$ mit Twist = Nettotwist [t/m].

Zweckmäßig ist es, wenn das hochmodulige Garn eine Feinheit von 220 dtex bis 3360 dtex, bevorzugt von 500 dtex bis 2200 dtex, besonders bevorzugt von 1000 dtex bis 1800 dtex aufweist.

Zweckmäßig ist es, wenn das Garn aus Stapelfasern eine Feinheit von 220 dtex bis 3360 dtex, bevorzugt von 220 dtex bis 2200 dtex, besonders bevorzugt von 1000 dtex bis 1800 dtex aufweist.

Zweckmäßig ist es, wenn die Nettoverdrehung des hochmoduligen Garnes zwischen 0 und 30 tpm, bevorzugt zwischen 0 und 15, besonders bevorzugt zwischen 0 und 5 liegt.

In einer besonderen Ausführungsform der Erfindung besteht das hochmodulige Garn aus p-Aramid mit einer Feinheit von 1680 dtex und das niedermoduliege Garn aus Polyester mit einer Feinheit von 1440 dtex, wobei das hochmodulige Garn mit 180 tpm in S- oder Z-Richtung verdreht ist, während das niedermodulige Garn mit 220 tpm entgegengesetzt zum hochmoduligen Garn verdreht ist und wobei der Hybridkord eine Endverdrehung entgegen der Drehrichtung des hochmoduligen Garnes von 180 tpm aufweist.

In einer anderen besonderen Ausführungsform der Erfindung besteht das hochmodulige Garn aus p-Aramid mit einer Feinheit von 1680 dtex und das niedermodulige Garn aus Polyester mit einer Feinheit von 1440 dtex besteht, wobei das hochmodulige Garn mit 160 tpm in S- oder Z-Richtung verdreht ist, während das niedermodulige Garn mit 240 tpm entgegengesetzt zum hochmoduligen Garn verdreht ist und wobei der Hybridkord eine Endverdrehung entgegen der Drehrichtung des hochmoduligen Garnes von 160 tpm aufweist.

Die nachfolgende Tabelle 2 gibt die mechanischen Eigenschaften der vorgenannten zwei Ausführungsbeispiele im Vergleich zu baugleichen Hybridkorden wieder, bei denen das niedermodulige Garn kein Stapelfasergarn, sondern ein Filamentgarn ist.

Tabelle 2

| Twist [tpm] | | | Mechanische Eigenschaften | | | | | | | |
| --- | --- | --- | --- | --- | --- | --- | --- | --- | --- | --- |
| | | | Erfindungsgemäßer Kord Filamentgam/Stapelfasergam | | | | Vergleichskord Filamentgarn/ Filamentgarn | | | |
| PET 1440 | Aramid 1680 | Kord | Bruchkraft [N] | Bruchdehnung [%] | FASE 3,5% [N] | Q | Bruchkraft [N] | Bruchdehnung [%] | FASE 3,5% [N] | Q |
| 220Z | 180S | 180Z | 229+-21 | 8,7+-0,5 | 22+-3 | 13,6 | 338+-16 | 9,6+-0,3 | 35+-1 | 9,7 |
| 240Z | 160S | 160Z | 327+-15 | 7,9+-0,3 | 29+-5 | 11,3 | 335+-34 | 7,4+-0,4 | 63+-5 | 5,3 |
| S: Drehung (twist) in S-Richtung<br>Z: Drehung (twist) in Z-Richtung<br>Q: Quotient aus Bruchkraft [N] durch FASE [N] bei 3,5% | | | | | | | | | | |

Es ist zu erkennen, dass der erfindungsgemäße Kord einen Quotienten Q von 11,3 und von 13,6 aufweist, also > 10 ist, während der Vergleichskord aus Filamentgarnen einen Quotienten Q von 9,7 und 5,3 aufweist.

Die Erfindung betrifft ferner einen Fahrzeugluftreifen in Radialbauart mit einem mehrlagigen Gürtel und einer den Gürtel radial außen bedeckenden Gürtellage. In dem erfindungsgemäßen Reifen weist die Gürtelbandage als Festigkeitsträger einen erfindungsgemäßen Hybridkord auf. Alternativ oder zusätzlich kann auch die Radialkarkasse einen erfindungsgemäßen Hybridkord enthalten.

**Patentansprüche**

1. Hybridkord zur Verwendung als Festigkeitsträger in einem Bauteil eines Fahrzeugluftreifens aus zumindest zwei miteinander endverdrehten Garnen, wobei wenigstens ein erstes Garn ein hochmoduliges Garn und ein weiteres Garn ein niedermoduliges Garn ist, wobei das hochmodulige Garn ein Filamentgarn und das niedermodulige Garn ein Garn aus Stapelfasern ist,

   wobei ein niedermoduliges Garn ein solches ist, bei welchem die Kraft, die auf das Garn bei 1% Dehnung aufgebracht werden muss, < 150mN/tex und die Kraft, die bei 2% Dehnung aufgebracht werden muss, < 200mN/tex ist, ermittelt gemäß ASTM D885, wobei ein hochmoduliges Garn ein solches ist, bei welchem die Kraft, die auf das Garn bei 1% Dehnung aufgebracht werden muss, > 300mN/tex und die Kraft, die bei 2% Dehnung aufgebracht werden muss, > 500mN/tex ist, ermittelt gemäß ASTM D885,
   **dadurch gekennzeichnet, dass** die Garndrehung des niedermoduligen Garnes entgegengesetzt zu der Garndrehung des hochmoduligen Garnes ist, wobei das niedermodulige Garn im Kord überdreht ist und eine Nettoverdrehung von > 300 tpm aufweist, wobei die Endverdrehung des Hybridkordes entgegen der Drehrichtung des hochmoduligen Garnes derart gewählt ist, dass die Nettoverdrehung des hochmoduligen Garnes zwischen 0 und 50 tpm liegt und dass der Hybridkord einen Quotienten aus Bruchkraft [N] durch Kraft [N] bei spezifischer Dehnung bei 3,5% > 10 aufweist, ermittelt nach ASTM D885.

2. Hybridkord nach Anspruch 1, **dadurch gekennzeichnet, dass** der Hybridkord eine Bruchdehnung im Bereich ≥ 5 % aufweist.

3. Hybridkord nach Anspruch 1 oder 2, **dadurch gekennzeichnet, dass** die Stapelfasern Fasern aus Aramid, Polyimid, PPS, Polyamid, Polyester oder PEEK sind.

4. Hybridkord nach Anspruch 1 oder 2, **dadurch gekennzeichnet, dass** die Stapelfasern Naturfasern aus Baumwolle, Jute, Flachs, Viskose® oder Modal® sind.

5. Hybridkord nach Anspruch 1, **dadurch gekennzeichnet, dass** das hochmodulige Garn aus Filamenten aus Aramid, Polyimid, PPS oder PEEK besteht.

6. Hybridkord nach einem oder mehreren der vorangehenden Ansprüche, **dadurch gekennzeichnet, dass** der Twistfaktor des hochmoduligen Garnes in einem Bereich von 50 bis 100, vorzugsweise in einem Bereich von 63 bis 100 liegt, wobei $\alpha$ = Twist [t/m] · (Feinheit [dtex]/ 10000)$^{1/2}$ mit Twist = Kordverdrehung [t/m] +-Nettoverdrehung [t/m], entspricht die Drehung des hochmoduligen Filamentgarns [t/m].

7. Hybridkord nach einem oder mehreren der vorangehenden Ansprüche, **dadurch gekennzeichnet, dass** der Twistfaktor $\alpha$ des niedermoduligen Garnes in einem Bereich von 100 bis 200, vorzugsweise in einem Bereich von 80 bis 95 liegt, wobei $\alpha$ = Twist [t/m] · (Feinheit [dtex]/ 10000)$^{1/2}$ mit Twist = Nettotwist [t/m].

8. Hybridkord nach einem der Ansprüche 1 bis 7, **dadurch gekennzeichnet, dass** das hochmodulige Garn eine Feinheit von 220 dtex bis 3360 dtex, bevorzugt von 500 dtex bis 2200 dtex, besonders bevorzugt von 1000 dtex bis 1800 dtex aufweist.

9. Hybridkord nach einem der Ansprüche 1 bis 8, **dadurch gekennzeichnet, dass** das Garn aus Stapelfasern eine Feinheit von 220 dtex bis 3360 dtex, bevorzugt von 220 dtex bis 2200 dtex, besonders bevorzugt von 1000 dtex bis 1800 dtex aufweist.

10. Hybridkord nach einem der Ansprüche 1 bis 9, **dadurch gekennzeichnet, dass** die Nettoverdrehung des hochmoduligen Garnes zwischen 0 und 30 tpm, bevorzugt zwischen 0 und 15, besonders bevorzugt zwischen 0 und 5 liegt.

**11.** Hybridkord nach einem der Ansprüche 1 bis 10, **dadurch gekennzeichnet, dass** das hochmodulige Garn aus p-Aramid mit einer Feinheit von 1680 dtex und das niedermoduliege Garn aus Polyester mit einer Feinheit von 1440 dtex besteht, wobei das hochmodulige Garn mit 180 tpm in S- oder Z-Richtung verdreht ist, während das niedermodulige Garn mit 220 tpm entgegengesetzt zum hochmoduligen Garn verdreht ist und dass der Hybridkord eine Endverdrehung entgegen der Drehrichtung des hochmoduligen Garnes von 180 tpm aufweist.

**12.** Hybridkord nach einem der Ansprüche 1 bis 10, **dadurch gekennzeichnet, dass** das hochmodulige Garn aus p-Aramid mit einer Feinheit von 1680 dtex und das niedermoduliege Garn aus Polyester mit einer Feinheit von 1440 dtex besteht, wobei das hochmodulige Garn mit 160 tpm in S- oder Z-Richtung verdreht ist, während das niedermodulige Garn mit 240 tpm entgegengesetzt zum hochmoduligen Garn verdreht ist und dass der Hybridkord eine Endverdrehung entgegen der Drehrichtung des hochmoduligen Garnes von 160 tpm aufweist.

**13.** Fahrzeugluftreifen in Radialbauart mit einer Radialkarkasse, einem mehrlagigen Gürtel und einer den Gürtel radial außen bedeckenden Gürtelbandage, **dadurch gekennzeichnet, dass** die Gürtelbandage als Festigkeitsträger einen Hybridkord gemäß einem oder mehreren der Ansprüche 1 bis 12 aufweist.

**14.** Fahrzeugluftreifen in Radialbauart mit einer Radialkarkasse, einem mehrlagigen Gürtel und gegebenenfalls einer den Gürtel radial außen bedeckenden Gürtelbandage, **dadurch gekennzeichnet, dass** die Radialkarkasse als Festigkeitsträger einen Hybridkord gemäß einem oder mehreren der Ansprüche 1 bis 12 aufweist.

## Claims

**1.** Hybrid cord for use as a strength member in a component of a pneumatic vehicle tyre composed of at least two mutually end-twisted yarns, wherein at least one first yarn is a high-modulus yarn and a further yarn is a low-modulus yarn, wherein the high-modulus yarn is a filament yarn and the low-modulus yarn is a yarn composed of staple fibres,

wherein a low-modulus yarn is a yarn where the force applicable to the yarn at 1% elongation is < 150 mN/tex and the force applicable to the yarn at 2% elongation is < 200 mN/tex determined according to ASTM D885, wherein a high-modulus yarn is a yarn where the force applicable to the yarn at 1% elongation is > 300 mN/tex and the force applicable to the yarn at 2% elongation is > 500 mN/tex determined according to ASTM D885, **characterized in that** the yarn twist of the low-modulus yarn is opposed to the yarn twist of the high-modulus yarn, wherein the low-modulus yarn is overtwisted in the cord and has a net twist of > 300 tpm, wherein the end-twist of the hybrid cord opposed to the twist direction of the high-modulus yarn is chosen such that the net twist of the high-modulus yarn is between 0 and 50 tpm and **in that** the hybrid cord has a quotient of breaking force [N] divided by force [N] at a specific elongation of 3.5% of >10 determined according to ASTM D885.

**2.** Hybrid cord according to Claim 1, **characterized in that** the hybrid cord has a breaking elongation in the range $\geq$ 5%.

**3.** Hybrid cord according to Claim 1 or 2, **characterized in that** the staple fibres are fibres composed of aramid, polyimide, PPS, polyamide, polyester or PEEK.

**4.** Hybrid cord according to Claim 1 or 2, **characterized in that** the staple fibres are natural fibres composed of cotton, jute, flax, Viskose® or Modal®.

**5.** Hybrid cord according to Claim 1, **characterized in that** the high-modulus yarn consists of filaments composed of aramid, polyimide, PPS or PEEK.

**6.** Hybrid cord according to one or more of the preceding claims, **characterized in that** the twist factor of the high-modulus yarn is in a range from 50 to 100, preferably in a range from 63 to 100, wherein $\alpha$ = twist [t/m] · (fineness [dtex]/10 000)$^{1/2}$ where twist = cord twist [t/m] + net twist [t/m] and corresponds to the twist of the high-modulus filament yarn [t/m].

**7.** Hybrid cord according to one or more of the preceding claims, **characterized in that** the twist factor $\alpha$ of the low-modulus yarn is in a range from 100 to 200, preferably in a range from 80 to 95, wherein $\alpha$ = twist [t/m] · (fineness [dtex]/10 000)$^{1/2}$ where twist = net twist [t/m].

**8.** Hybrid cord according to any of Claims 1 to 7, **characterized in that** the high-modulus yarn has a fineness of 220 dtex to 3360 dtex, preferably of 500 dtex to 2200 dtex, particularly preferably from 1000 dtex to 1800 dtex.

9. Hybrid cord according to any of Claims 1 to 8, **characterized in that** the yarn composed of staple fibres has a fineness of 220 dtex to 3360 dtex, preferably of 220 dtex to 2200 dtex, particularly preferably of 1000 dtex to 1800 dtex.

10. Hybrid cord according to any of Claims 1 to 9, **characterized in that** the net twist of the high-modulus yarn is between 0 and 30 tpm, preferably between 0 and 15, particularly preferably between 0 and 5.

11. Hybrid cord according to any of Claims 1 to 10, **characterized in that** the high-modulus yarn is composed of p-aramid having a fineness of 1680 dtex and the low-modulus yarn is composed of polyester having a fineness of 1440 dtex, wherein the high-modulus yarn is twisted with 180 tpm in the S or Z direction while the low-modulus yarn is twisted with 220 tpm in the opposite direction to the high-modulus yarn and **in that** the hybrid cord has an end-twist counter to the twist direction of the high-modulus yarn of 180 tpm.

12. Hybrid cord according to any of Claims 1 to 10, **characterized in that** the high-modulus yarn is composed of p-aramid having a fineness of 1680 dtex and the low-modulus yarn is composed of polyester having a fineness of 1440 dtex, wherein the high-modulus yarn is twisted with 160 tpm in the S or Z direction while the low-modulus yarn is twisted with 240 tpm in the opposite direction to the high-modulus yarn and **in that** the hybrid cord has an end-twist counter to the twist direction of the high-modulus yarn of 160 tpm.

13. Radial-type pneumatic vehicle tyre having a radial carcass, a multilayered belt and a belt bandage radially outwardly covering the belt, **characterized in that** the belt bandage comprises as a strength member a hybrid cord according to one or more of Claims 1 to 12.

14. Radial-type pneumatic vehicle tyre having a radial carcass, a multilayered belt and optionally a belt bandage radially outwardly covering the belt, **characterized in that** the radial carcass comprises as a strength member a hybrid cord according to one or more of Claims 1 to 12.

**Revendications**

1. Câble hybride destiné à être utilisé comme support de résistance dans un composant d'un pneumatique de véhicule, constitué d'au moins deux fils torsadés ensemble, au moins un premier fil étant un fil à haut module et un autre fil étant un fil à bas module, le fil à haut module étant un fil de filaments et le fil à bas module étant un fil de fibres discontinues,
un fil à bas module étant un fil dans lequel la force qui doit être appliquée sur le fil pour un allongement de 1% est < 150 mN/tex, et la force qui doit être appliquée pour un allongement de 2% est < 200 mN/tex, déterminée selon ASTM D885, un fil à haut module étant un fil dans lequel la force qui doit être appliquée sur le fil pour un allongement de 1% est > 300 mN/tex et la force qui doit être appliquée pour un allongement de 2% est > 500 mN/tex, déterminée selon ASTM D885,
**caractérisé par le fait que** la torsion du fil à bas module est opposée à la torsion du fil à haut module, le fil à bas module étant sur-torsadé dans le câble et présentant une torsion nette de > 300 tpm, la torsion finale du câble hybride dans le sens inverse de la torsion du fil à haut module étant choisie pour que la torsion nette du fil à haut module se situe entre 0 et 50 tpm et que le câble hybride présente un quotient de la force de rupture [N] par la force [N] pour un allongement spécifique à 3,5% > 10, déterminé selon ASTM D885.

2. Câble hybride selon la revendication 1, **caractérisé par le fait que** le câble hybride présente un allongement à la rupture dans une plage ≥ 5 %.

3. Câble hybride selon la revendication 1 ou 2, **caractérisé par le fait que** les fibres discontinues sont des fibres d'aramide, de polyimide, de PPS, de polyamide, de polyester ou de PEEK.

4. Câble hybride selon la revendication 1 ou 2, **caractérisé par le fait que** les fibres discontinues sont des fibres naturelles de coton, de jute, de lin, de viscose® ou de modal®.

5. Câble hybride selon la revendication 1, **caractérisé par le fait que** le fil à haut module est composé de filaments d'aramide, de polyimide, de PPS ou de PEEK.

**6.** Câble hybride selon une ou plusieurs des revendications précédentes, **caractérisé par le fait que** le facteur de torsion du fil à haut module se situe dans une gamme allant de 50 à 100, de préférence dans une gamme allant 63 à 100, où $\alpha$ = torsion [t/m] · (finesse [dtex]/10000)$^{1/2}$ avec torsion = torsion du câble [t/m] +- torsion nette [t/m], correspond à la torsion du fil de filaments à haut module [t/m].

**7.** Câble hybride selon une ou plusieurs des revendications précédentes, **caractérisé par le fait que** le facteur de torsion $\alpha$ du fil à bas module se situe dans une gamme allant de 100 à 200, de préférence dans une gamme allant de 80 à 95, où $\alpha$ = torsion [t/m] · (finesse [dtex]/10000)$^{1/2}$ avec torsion = torsion nette [t/m].

**8.** Câble hybride selon l'une des revendications 1 à 7, **caractérisé par le fait que** le fil à haut module présente une finesse de 220 dtex à 3360 dtex, de préférence de 500 dtex à 2200 dtex, et, de façon encore préférée, de 1000 dtex à 1800 dtex.

**9.** Câble hybride selon l'une des revendications 1 à 8, **caractérisé par le fait que** le fil de fibres discontinues présente une finesse de 220 dtex à 3360 dtex, de préférence de 220 dtex à 2200 dtex, et encore mieux de 1000 dtex à 1800 dtex.

**10.** Câble hybride selon l'une des revendications 1 à 9, **caractérisé par le fait que** la torsion nette du fil à haut module se situe entre 0 et 30 tpm, de préférence entre 0 et 15, et, de façon encore préférée, entre 0 et 5.

**11.** Câble hybride selon l'une des revendications 1 à 10, **caractérisé par le fait que** le fil à haut module est composé de p-aramide d'une finesse de 1680 dtex et le fil à bas module est composé de polyester d'une finesse de 1440 dtex, le fil à haut module étant tordu à 180 tpm dans le sens S ou Z, tandis que le fil à bas module est tordu à 220 tpm dans le sens inverse du fil à haut module, et **par le fait que** le câblé hybride présente une torsion finale de 180 tpm dans le sens inverse de la torsion du fil à haut module.

**12.** Câble hybride selon l'une des revendications 1 à 10, **caractérisé par le fait que** le fil à haut module est composé de p-aramide d'une finesse de 1680 dtex et le fil à bas module est en polyester d'une finesse de 1440 dtex, le fil à haut module étant torsadé à 160 tpm dans le sens S ou Z, tandis que le fil à bas module est torsadé à 240 tpm dans le sens opposé au fil à haut module, et **par le fait que** le câblé hybride présente une torsion finale de 160 tpm dans le sens opposé au sens de torsion du fil à haut module.

**13.** Pneumatique pour véhicule de structure radiale comprenant une carcasse radiale, une ceinture multicouche et un bandage de ceinture recouvrant la ceinture radialement à l'extérieur, **caractérisé par le fait que** le bandage de ceinture, en tant que support de résistance, présente un câble hybride selon une ou plusieurs des revendications 1 à 12.

**14.** Pneumatique de véhicule de structure radiale comprenant une carcasse radiale, une ceinture multicouche et optionnellement un bandage de ceinture recouvrant la ceinture radialement à l'extérieur, **caractérisé par le fait que** la carcasse radiale, en tant que support de résistance, présente un câble hybride selon une ou plusieurs des revendications 1 à 12.

**EP 3 323 634 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3006228 A1
- WO 03060212 A1
- EP 1475248 A1
- DE 102008037615 A1
- DE 102011053264 A1